# EUROPEAN PATENT SPECIFICATION

(11) **EP 2 165 258 B1**
(45) Date of publication and mention of the grant of the patent: **16.03.2016**
(21) Application number: 08737184.5
(22) Date of filing: 15.04.2008
(51) Int. Cl.: G06F 9/45

(54) **APPARATUS AND METHOD FOR HANDLING EXCEPTION SIGNALS IN A COMPUTING SYSTEM**
GERÄT UND VERFAHREN FÜR BEARBEITUNG VON AUSNAHMEBEDINGUNGSSIGNALEN IN EINEM RECHNERSYSTEM
DISPOSITIF ET PROCÉDÉ DE GESTION DE SIGNAUX D'EXCEPTION DANS UN SYSTÈME INFORMATIQUE

(30) Priority: 19.04.2007 GB 0707528; 04.06.2007 US 810050
(43) Date of publication of application: 24.03.2010
(73) Proprietor: International Business Machines Corporation, Armonk, NY 10504 (US)
(72) Inventor: KNOWLES, Paul Thomas, Manchester Greater Manchester M15 (GB); WAN, Kit Man, Greater Manchester M1 1BY (GB)
(74) Representative: Gascoyne, Belinda Jane
(86) International application number: PCT/GB2008/050259
(87) International publication number: WO 2008/129315

(56) References cited:
- WO-A-2005/006106
- US-A1- 2003 182 484
- US-A1- 2004 268 370
- US-A1- 2006 253 271
- US-B1- 6 247 172

## Description

### Field of the Invention

The present invention relates generally to the field of computers and computer systems and, more particularly, to the handling of exception signals in the context of program code conversion methods and apparatus useful, for example, in code translators, emulators and accelerators. More particularly, the exemplary embodiments of the present invention relate to a method and apparatus for the handling of exception signals in combination with the dynamic conversion of binary code executable by a one computing platform into binary code executable instead by another computing platform.

### Background of the Invention

The central processing unit (CPU) or processor lies at the heart of all modern computing systems. The processor executes instructions of a computer program and thus enables the computer perform useful work. CPUs are prevalent in all forms of digital devices in modern life and not just dedicated computing machines such as personal computers, laptops and PDAs. Modern microprocessors appear in everything from automobiles to cellular telephones to children's toys.

A problem arises in that program code which is executable by one type of processor often cannot be executed in any other type of processor, because each type of processor has its own unique Instruction Set Architecture (ISA). Hence, program code conversion has evolved to automatically convert program code written for one type of processor into code which is executable by another type of processor, or to optimise an old, inefficient piece of code into a newer, faster version for the same type of processor. That is, in both embedded and non-embedded CPUs, there are predominant ISAs for which large bodies of software already exist that could be "accelerated" for performance or "translated" to other processors that present better cost/performance benefits. One also finds dominant CPU architectures that are locked in time to their ISA and cannot evolve in performance or market reach. This problem applies at all levels of the computing industry, from stand-alone pocket-sized computing devices right through to massive networks having tens or hundreds of powerful servers.

As background information in this field of program code conversion, PCT publication WO2000/22521 entitled "Program Code Conversion", WO2004/095264 entitled "Method and Apparatus for Performing Interpreter Optimizations during Program Code Conversion", WO2004/097631 entitled "Improved Architecture for Generating Intermediate Representations for Program Code Conversion", WO2005/006106 entitled "Method and Apparatus for Performing Adjustable Precision Exception Handling", and WO2006/103395 entitled "Method and Apparatus for Precise Handling of Exceptions During Program Code Conversion", which are all incorporated herein by reference, disclose methods and apparatus to facilitate program code conversion capabilities as may be employed in the example embodiments discussed herein.

One particular problem area concerns the handling of exception signals. An exception is a condition that changes the normal flow of control in a program. An exception signal indicates that a condition has occurred somewhere within the system that requires the attention of the processor and usually needs to be handled before processing can continue. Exceptions can be subdivided into various different types such as interrupts, faults, traps or aborts. The terminology varies between different architectures, and particular types or categories of exceptions may be unique to particular architectures.

Exception signals (often simply called "signals") may be raised by hardware or by software. Hardware exceptions include such signals as resets, interrupts, or signals from a memory management unit. As examples, exceptions may be generated by an arithmetic logic unit or floating-point unit for numerical errors such as divide-by-zero, for overflow or underflow, or for instruction decoding errors such as privileged, reserved, trap or undefined instructions. Software exceptions vary greatly across various different software programs but generally are applied to any kind of error checking which alters the normal behaviour of the program.

A signal handler is special code which is called upon when an exception signal occurs during the execution of a program. The signal handler then attempts to deal with whatever circumstances gave rise to the exception and, if possible, continue execution of the program. If the program does not provide a signal handler for a given signal then a default system signal handler will be called.

The most common events that trigger exception signals are when a process tries to (i) access an unmapped memory region or (ii) manipulate a memory region for which it does not have the correct permissions. Other common events that trigger exception signals are (iii) receipt of a signal sent from another process, (iv) execution of an instruction that the current process does not have the privilege level to execute, or (v) an Input/Output event in the hardware.

Some representative exception signals are described in Table 1. From the perspective of the target computing platform, each type of signal has a corresponding signal number which is usually an integer number #1, #2, #3, etc. Also, as shown in the table, it is common for each signal to have a memorable symbolic name.

**Table 1: Example Exception Signals**

| **SigNum** | **Signal** | **Description** |
|---|---|---|
| #1 | SIGHUP | "Hangup" - commonly used to indicate to a process that its configuration has changed, and that it should re-read its config file. |
| #2 | SIGINT | "Interrupt" - usually means Ctrl-C has been pressed by the user. |
| #3 | SIGILL | "Illegal Instruction" - the processor generates this when an invalid instruction opcode is encountered. |
| #4 | SIGTRAP | "Breakpoint" - often used by debuggers. |
| #5 | SIGBUS | "Bus Error" - usually generated by the processor to indicate an invalid memory access. This is usually an access to an unlocated or unaligned memory address. |
| #6 | SIGSEGV | "Segmentation Violation" - generated by the processor when a user process has tried to do something not permissible in user mode. For example, trying to execute a privileged instruction, or trying to write to part of the kernel memory would both arise this signal. |
| #7 | SIGALRM | "Alarm Clock" - a process can make an alarm () system call, which requests the delivery of this signal *n* seconds later. |
| #8 | SIGTERM | "Terminate" - polite request for a diagram to think about exciting, if it's not too inconvenient. |
| #9 | SIGQUIT | "Quit" - Firm request for a program to exit, now please! |
| #10 | SIGKILL | "Die" - immediately terminates the process. This signal cannot be intercepted by a signal handler. |

Exception signals can come from two sources: (1) directly from an executing program or (2) from the operating system or another process. Some exception signals are generated as a direct result of an instruction executed by the program. For example, if a program executes an illegal opcode, then SIGILL is raised. Similarly, if the program attempts an illegal memory access then SIGSEGV is raised. These are referred to as in-band signals. Exception signals can also be generated externally, either by the operating system or by another process. SIGHUP and SIGALRM are examples of these. These externally generated exception signals are called out-of-band signals.

From a program's point of view, an exception signal can occur at any time. When an exception signal occurs, the operating system interrupts the execution of the signalled program and invokes a signal handler. The operating system usually defines default signal handlers for all exceptions which receive the exception signals by default and either take predefined actions or simply ignore the signal. However, the operating system maintains a process- specific handling table which maps each type of signal to a registered signal handler. For example, in Unix, a program can override a default signal handler by invoking a sigaction() system call. Sigaction() allows the program to specify what action the operating system should take when a particular exception signal is received. The action can be: (1) ignore the exception signal; (2) call the default signal handler; or (3) call a specialized signal handler function, whose address is provided by the program. Other options that can be specified when making the sigaction() call include which other signals are blocked during execution of a signal handler, in much the same way as a CPU can mask certain interrupts.

A Unix signal handler is typically provided with one of two prototypes. The first signal handler prototype is "void sigHandler(int sigNum)." The first argument is the number of the exception signal, so that one function can be registered to handle multiple signals. A program can request that more information be provided to the signal handler by calling sigaction() with the SA_SIGINFO flag. In this case, the Unix signal handler prototype becomes "void sigHandler(int sigNum, siginfo_t sigInfo, void *context)."

The second parameter ("siginfo") is a structure which contains information about the signal, including some indication of what caused the signal and where it came from. For example, in the case of a SIGILL signal, the siginfo structure contains the address of the illegal instruction. This data can be essential to allow the process to handle the signal properly. The third parameter ("context") provides access to the processor state (including all registers) at the time the signal was raised. Again, this data can be essential to allow correct handling of a signal. The signal handler is allowed to modify this context and, when execution is resumed, the registers are then restored to the values of the modified context.

Where the original program code (here called "subject code") has been written according to a particular type of processor, then that subject code requires a particular type of execution environment and must be supported by an appropriate mechanism for the handling of exception signals. However, under program code conversion, the subject code is instead converted into target code and is executed on a target computing system. When an exception arises, there is now a difficulty in providing an appropriate mechanism to handle the exception.

In the field of program code conversion, it is apparent that when a target instruction is executed on a target processor and causes an exception signal to be reported, the target instruction generally will not fulfil the conditions for reporting an exception to a signal handler written in subject code. Instructions are almost always performed on the target processor in a different order to the order of instructions in the corresponding block of subject code, firstly due to the differences between the instruction set of the subject processor for which the subject code was written and the target processor on which the target code is run, and secondly because of the optimisations that typically occur during program code conversion. Hence, it is relatively easy to provide a target state to a signal handler, but it is difficult and costly to obtain an accurate subject state representing an equivalent point in execution of the original subject code.

A further problem arises in particularly in the field of dynamic program code conversion where execution of the translator which performs the program code conversion and execution of the target code generated by the translator are interleaved and may even share the same execution process on the target computing platform. In most systems there are only a limited number of exception signals. For example, there is only one SIGALRM signal which then may need to be shared between the translator and the target code. As a result, it is difficult for the target code to accurately emulate the original subject code without adversely affecting execution of the translator, or conversely it difficult for the translator target code to efficiently perform program code conversion without adversely affecting execution of the target code. The available signals in the target computing platform may become exhausted and, in the worst case, the program code conversion process must be terminated.

A yet further problem arises in that the subject code may have been written to make extensive use of signals, which cannot now be supported by the number or type of signals which are available on the target computing platform.

These and other problems of the prior art are addressed by the exemplary embodiments of the present invention as will be discussed in more detail below.

### Summary of the Invention

According to the present invention there is provided a computer system, a computer- readable storage medium and a method as set forth in the appended claims. Other features of the invention will be apparent from the dependent claims, and the description which follows.

The following is a summary of various aspects and advantages realizable according to embodiments of the invention. It is provided as an introduction to assist those skilled in the art to more rapidly assimilate the detailed discussion that follows and does not and is not intended in any way to limit the scope of the claims that are appended hereto.

In particular, the inventors have developed methods directed at program code conversion. These methods are especially useful in connection with a run-time translator that provides dynamic run-time translation or acceleration of binary program code.

In one exemplary aspect of the present invention there is provided a computing system, comprising: a translator unit arranged to convert subject code into target code; a processor unit arranged to execute the target code and provide a target state with respect to execution of the target code in the processor unit; a signal generator unit arranged to generate an exception signal at least in response to execution of the target code; and an exception handling unit arranged to handle the exception signal. Here, the exception handling unit includes a target-side exception handler unit arranged to receive the exception signal from the signal generator unit and to selectively handle the exception signal with respect to the target state; and a subject-side exception handler unit arranged to receive the exception signal from the target-side exception handling unit and to handle the exception signal with respect to a subject state, wherein the subject state is derived from the target state. The target-side exception handler unit may comprise a plurality of signal handling sub-units each arranged to selectively process the exception signal with respect to the target state and output a request to return to execution or else a request to pass on the exception signal; a delivery path selection unit arranged to determine a delivery path of the exception signal to a selected group of the plurality of signal handling sub-units; and a signal control unit arranged to deliver the exception signal in turn to each of the selected group of signal handling sub-units according to the delivery path and (i) where a respective one of the signal handling sub-units outputs the request to return execution then to return execution according to the target state; and (ii) where the signal handling sub-unit outputs the request to pass on the exception signal then to pass on the exception signal to a subsequent one of the selected group of signal handling sub-units according to the delivery path and, where no further of the signal handling sub-units are specified in the delivery path, then by default to deliver the exception signal to the subject-side exception handler unit.

In one embodiment, the signal generator unit generates the exception signals as one of a plurality of different types and the delivery path selection unit determines the delivery path according to the type of the exception signal. Optionally, the delivery path selection unit comprises a table which maps a set of different types of the exception signals each to a respective group of the signal handling sub-units. Optionally, the table maps each type of the exception signals to a respective group comprising none, one or more of the signal handling sub-units. Here, the table includes at least one group comprising a plurality of the signal handling sub-units.

In one embodiment, the delivery path selection unit is arranged to determine the delivery path to specify an order of delivery of the exception signal to the selected group of signal handling sub-units, and the signal control unit delivers the exception signal to the selected group of signal handling sub-units in order according to the order of delivery.

In one embodiment, the signal generator unit is arranged to generate a plurality of exception signals at least some of which are interceptable and the exception handling unit is registered with the signal handling unit to receive one or more of the exception signals which are interceptable.

In one embodiment, the processor unit is arranged to execute both the translator unit and the target code and to provide the target state representing a current state of execution in the processor unit in relation to the target code and the translator unit, respectively; the signal generator unit is arranged to generate a plurality of the exception signals in relation to the execution of the target code and in relation to the translator unit; and at least one of the signal handling sub-units is arranged to handle a respective one or more of the exception signals with respect to the target state when the exception signal results from execution of the translator unit. Optionally, at least one of the signal handling sub-units is arranged to process the same exception signal, or at least the same type of exception signal, with respect to the target state when the exception signal results from execution of the target code.

In one embodiment, the subject-side exception handler is arranged to handle the exception signal with respect to the subject state derived from the target state only when the exception signal results from execution of the target code. Thus, the subject-side exception handler does not handle the exception signal when the exception signal results from execution of the translator unit.

In one embodiment, the delivery path selection unit determines the delivery path for at least one type of the exception signals specifically to include the subject-side exception handler unit; and the signal control unit delivers the exception signal to the subject-side exception handler unit according to the delivery path.

In one embodiment, the signal control unit is arranged to deliver the exception signal to the subject-side exception handler unit after delivering the exception signal to each of a selected group of the signal handling sub-units, according to the delivery path.

In one embodiment, the exception handling unit further comprises at least one of a crash reporter unit arranged to generate and store a crash report data structure concerning the state of execution of the processor unit relating to a crash following the exception signal, and return to execution or terminate execution; and a default handler unit arranged to handle the exception signal according to a predetermined exception handling protocol and return to execution or terminate execution. Optionally, the delivery path selection unit determines the delivery path to include the crash reporter unit and/or the default handler unit. The signal control unit delivers the exception signal to the crash reporter unit and the default handler unit respectively according to the delivery path. Optionally, the signal control unit is arranged to deliver the exception signal to the crash reporter unit and/or to the default handler unit after delivering the exception signal to each of a selected group of the signal handling sub-units and to the subject-side exception handler unit, according to the delivery path.

In one embodiment, each of the plurality of signal handling sub-units comprises an entry unit arranged to receive the exception signal and determine whether or not to process this exception signal; a signal processing unit arranged to perform a predetermined signal processing function on the exception signal with respect to the target state when determined by the entry unit, including selectively modifying the target state such that execution will resume differently in response to the exception signal; and an exit unit arranged to output the request either to return to execution or to pass on the exception signal. Optionally, the target state includes a signal information data structure containing information relating to the exception signal. Optionally, the target state includes a signal context data structure containing information relating to a context of the processor unit with respect to the exception signal.

In one embodiment, the subject-side exception handler comprises a converter unit arranged to convert the target state into the subject state; a plurality of subject-side signal handling sub-units each arranged to selectively process the exception signal with respect to the subject state and determine either to pass on the exception signal or request a return to execution; a subject-side delivery path selection unit arranged to determine a delivery path of the exception signal where the delivery path specifies a selected group of one or more amongst the plurality of subject-side signal handling sub-units; and a subject-side signal control unit arranged to pass the exception signal in turn to each of the selected group of subject-side signal handling sub-units and return to execution in response to the request from a respective one of the group of subject-side signal handling sub-units. Optionally, the converter is further arranged to reconvert the subject state into the target state when the subject-side signal control unit determines to return to execution.

In one embodiment, each of the plurality of subject-side signal handling sub-units comprises an entry unit arranged to receive the exception signal and determine whether or not to process this exception signal; a signal processing unit arranged to perform a predetermined signal processing function on the exception signal with respect to the subject state when determined by the entry unit, including selectively modifying the subject state such that execution will resume differently in response to the exception signal; and an exit unit arranged to output the request either to return to execution or to pass on the exception signal.

Optionally, the subject state includes a subject signal information data structure containing information relating to a converted form of the exception signal. Optionally, the subject state includes a subject signal context data structure containing information relating to a context of the emulated subject processor with respect to the converted form of the exception signal.

In one embodiment, the signal control unit is arranged to dynamically reconfigure the delivery path selection unit to determine a different delivery path for the exception signal.

Optionally, the signal control unit is arranged to reconfigure the delivery path selection unit to add, amend or replace the delivery path for a particular type of the exception signal.

Optionally, the signal control unit is arranged to reconfigure the delivery path selection unit to add, amend or replace one or more of the signal handling sub-units in the selected group according to the delivery path for a particular type of the exception signal.

In one embodiment, the subject code is binary program code which is directly executable by a processor of a subject type. In one embodiment, the target code is binary program code which is directly executable by the processor unit.

In one embodiment, translator unit is arranged to convert the subject code being binary program code which is directly executable by a processor of a first type into the target code being binary program code which is directly executable by the processor unit.

In one embodiment, the translator unit is arranged to translate the subject code written for execution by a processor of a first type into the target code executed by the processor unit of a different non-compatible second type.

In one embodiment, the translator unit is arranged to optimise the subject code written for execution by a processor of a first type into the target code that is executed more efficiently by the processor unit of the same first type.

In another aspect of the present invention there is provided a method of handling an exception signal in a computing system having at least one processor, the method comprising the computer-implemented steps of: converting subject code into target code executable by the at least one processor; executing the target code on the at least one processor; generating an exception signal in relation to execution of the target code; determining a signal delivery path with respect to the exception signal where the signal delivery path specifies a group of signal handling sub-units selected from amongst a plurality of signal handling sub-units; delivering the exception signal to a first of the signal handling sub-units in the group according to the signal delivery path; determining whether to process the signal in the signal handling sub-unit and if so then processing the signal in the signal handling sub-unit to handle the exception; and deciding whether to request a return to execution and if so then returning to execution; or else passing the exception signal to a next signal handling sub-unit of the group according to the signal delivery path and repeating the determining and deciding steps in relation to the next signal handling sub-unit.

In yet another aspect of the present invention there is provided a method of handling an exception signal in a computing system, comprising the computer-implemented steps of converting subject code executable by a subject processor type into target code executable by at least one processor; executing the target code in the at least one processor; generating an exception signal in relation to execution of the target code; determining whether or not to handle the exception signal solely with reference to a target state data structure containing information representing a state of execution of the computing system in relation to the exception signal; and if not, then converting the target state data structure into a subject state data structure containing information representing an emulated state of execution of the subject code on the subject processor type relating to the exception signal and handling the exception signal with respect to the subject state data structure.

The exemplary embodiments handle at least some types of exception signals solely with reference to the target state and thus reduce the number of occasions when the target state must be converted into the subject state. As a result, the computing system is now able to execute faster and more efficiently.

Further, the exemplary embodiments of the invention are arranged to deliver certain types of exception signals to multiple signal handling sub-units, each of which then has the opportunity to examine and handle the exception. A single exception signal is thus exposed for multiple different purposes. This mechanism allows a single type of exception signal - such as an alarm signal - to be shared between the target code and the translator.

Further still in the exemplary embodiments discussed herein, subject code which makes extensive use of signals is readily supported now when converted to target code and executed on the target computing platform, even though the target computing platform may have significantly different numbers or types of exception signals. The present invention also extends to a computer-readable storage medium having instructions recorded thereon which when implemented by a computer system perform any of the methods defined herein.

At least some embodiments of the invention may be constructed, partially or wholly, using dedicated special-purpose hardware. Terms such as 'component', 'module' or 'unit' used herein may include, but are not limited to, a hardware device, such as a Field Programmable Gate Array (FPGA) or Application Specific Integrated Circuit (ASIC), which performs certain tasks. Alternatively, elements of the invention may be configured to reside on an addressable storage medium and be configured to execute on one or more processors. Thus, functional elements of the invention may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Further, although the preferred embodiments have been described with reference to the components, modules and units discussed below, such functional elements may be combined into fewer elements or separated into additional elements.

### Brief Description of the Drawings

The accompanying drawings, which are incorporated in and constitute a part of the specification, illustrate presently preferred implementations and are described as follows:
Figure 1 is a block diagram illustrative of apparatus wherein embodiments of the invention are applied;
Figure 2 is a schematic overview of a program code conversion process as employed by embodiments of the present invention;
Figure 3 is a schematic diagram illustrating control flow during exception handling in exemplary embodiments of the present invention; Figure 4 is a schematic diagram illustrating parts of an exemplary computing system relating to exception handling;
Figure 5 is a schematic diagram illustrating an exemplary signal handling sub-unit;
Figure 6 is a schematic flow diagram illustrating a method of handling exception signals according to exemplary embodiments of the present invention;
Figure 7 is a schematic diagram illustrating parts of an exemplary computing system relating to exception handling;
Figure 8 is a schematic flow diagram illustrating a further method of handling exception signals according to exemplary embodiments of the present invention;
Figure 9 is a schematic diagram further illustrating parts of an exemplary computing system relating to exception handling;
Figure 10 is another schematic diagram illustrating parts of an exemplary computing system relating to exception handling;
Figure 11 is a schematic diagram further illustrating parts of an exemplary computing system relating to exception handling; and
Figure 12 is another schematic diagram further illustrating parts of an exemplary computing system relating to exception handling.

### Detailed Description

The following description is provided to enable a person skilled in the art to make and use the invention and sets forth the best modes contemplated by the inventors of carrying out their invention. Various modifications and equivalents, however, will be readily apparent to those skilled in the art, based on the general principles of the present invention as explained herein.

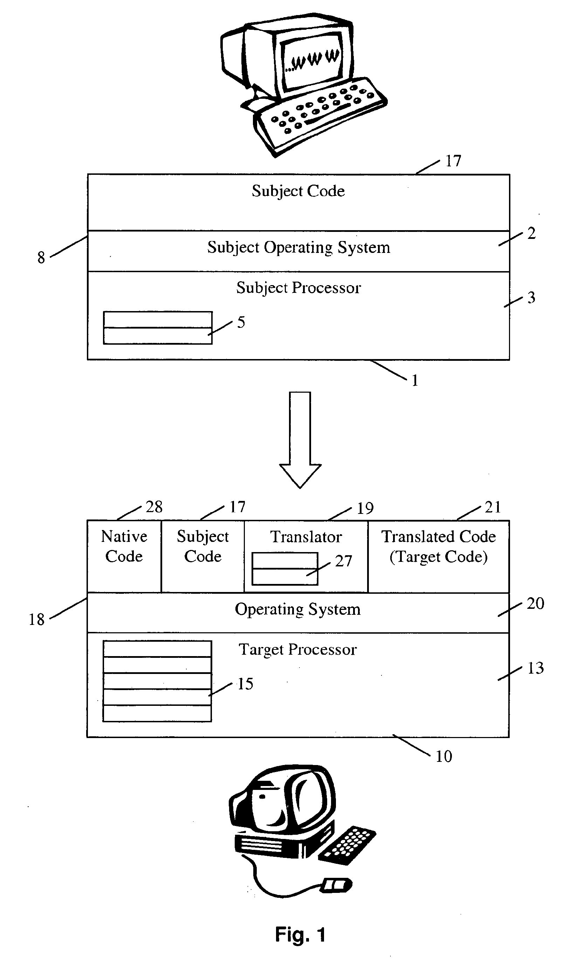

Figure 1 gives an overview of a system and environment where the example embodiments of the present invention are applied, in order to introduce the components, modules and units that will be discussed in more detail below. Referring to Figure 1 , a subject program 17 is intended to execute on a subject computing platform 1 having at least one subject processor 3. However, a target computing platform 10 is instead used to execute the subject program 17, through a translator unit 19 which performs program code conversion. The translator unit 19 performs code conversion from the subject code 17 to target code 21 , such that the target code 21 is executable on the target computing platform 10.

As will be familiar to those skilled in the art, the subject processor 3 has a set of subject registers 5. A subject memory 8 holds, inter alia, the subject code 17 and a subject operating system 2. Similarly, the example target computing platform 10 in Figure 1 comprises at least one target processor 13 having a plurality of target registers 15, and a memory 18 to store a plurality of operational components including a target operating system 20, the subject code 17, the translator code 19, and the translated target code 21. The target computing platform 10 is typically a microprocessor-based computer or other suitable computer.

In one embodiment, the translator code 19 is an emulator to translate subject code of a subject instruction set architecture (ISA) into translated target code of another ISA, with or without optimisations. In another embodiment, the translator 19 functions as an accelerator for converting the subject code into the target code, each of the same ISA, whilst performing various optimisations that improve performance of the target computing platform.

The translator code 19 is suitably a compiled version of source code implementing the translator, and runs in conjunction with the operating system 20 on the target processor 13. It will be appreciated that the structure illustrated in Figure 1 is exemplary only and that, for example, software, methods and processes according to embodiments of the invention may be implemented in code residing within or beneath an operating system 20. The subject code 17, translator code 19, operating system 20, and storage mechanisms of the memory 18 may be any of a wide variety of types, as known to those skilled in the art.

In the apparatus according to Figure 1, program code conversion is performed dynamically, at run-time, to execute on the target architecture 10 while the target code 21 is running. That is, the translator 19 runs inline with the translated target code 21. Running the subject program 17 through the translator 19 involves two different types of code that execute in an interleaved manner: the translator code 19; and the target code 21. Hence, the target code 21 is generated by the translator code 19, throughout run-time, based on the stored subject code 17 of the program being translated.

In one embodiment, the translator unit 19 emulates relevant portions of the subject architecture 1 such as the subject processor 3 and particularly the subject registers 5, whilst actually executing the subject program 17 as target code 21 on the target processor 13. In the preferred embodiment, at least one global register store 27 is provided (also referred to as the subject register bank 27 or abstract register bank 27). In a multiprocessor environment, optionally more than one abstract register bank 27 is provided according to the architecture of the subject processor. A representation of a subject state is provided by components of the translator 19 and the target code 21. That is, the translator 19 stores the subject state in a variety of explicit programming language devices such as variables and/or objects. The translated target code 21, by comparison, provides subject processor state implicitly in the target registers 15 and in memory locations 18, which are manipulated by the target instructions of the target code 21. For example, a low-level representation of the global register store 27 is simply a region of allocated memory. In the source code of the translator 19, however, the global register store 27 is a data array or an object which can be accessed and manipulated at a higher level.

Suitably, the translator 19 divides the subject code 17 into a plurality of translation units or blocks. Commonly, each of these subject code block corresponds to one basic block of the subject code. The term "basic block" will be familiar to those skilled in the art. That is, each basic block is a sequential set of instructions between a first instruction at a single entry point and a last instruction at a single exit point (such as a jump, call or branch instruction). Thus, a basic block is a section of code with exactly one entry point and exactly one exit point, which limits the block code to a single control path. For this reason, basic blocks are a useful fundamental unit of control flow., The translator 19 may select just one of these basic blocks (block mode) or select a group of the basic blocks (group block mode). A group block suitably comprises two or more basic blocks which are to be treated together as a single unit. Further, the translator may form iso-blocks representing the same block of subject code but under different entry conditions.

In the preferred embodiments, trees of Intermediate Representation (IR) are generated based on a subject instruction sequence, as part of the process of generating the target code 21 from the original subject program 17. IR trees are abstract representations of the expressions calculated and operations performed by the subject program. Later, the target code 21 is generated ("planted") based on the IR trees. Collections of IR nodes are actually directed acyclic graphs (DAGs), but are referred to colloquially as "trees".

As those skilled in the art may appreciate, in one embodiment the translator 19 is implemented using an object-oriented programming language such as C++. For example, an IR node is implemented as a C++ object, and references to other nodes are implemented as C++ references to the C++ objects corresponding to those other nodes. An IR tree is therefore implemented as a collection of IR node objects, containing various references to each other.

Further, in the embodiment under discussion, IR generation uses a set of register definitions which correspond to specific features of the subject architecture upon which the subject program 17 is intended to run. For example, there is a unique register definition for each physical register on the subject architecture (i.e., the subject registers 5 of Figure 1 ). As such, register definitions in the translator may be implemented as a C++ object which contains a reference to an IR node object (i.e., an IR tree). The aggregate of all IR trees referred to by the set of register definitions is referred to as the working IR forest ("forest" because it contains multiple abstract register roots, each of which refers to an IR tree). These IR trees and other processes suitably form part of the translator 19.

Figure 1 further shows native code 28 in the memory 18 of the target architecture 10. There is a distinction between the target code 21, which results from the run-time translation of the subject code 17, and the native code 28, which is written or compiled directly for the target architecture. In some embodiments, a native binding is implemented by the translator 19 when it detects that the subject programs flow of control enters a section of subject code 17, such as a subject library, for which a native version of the subject code exists. Rather than translating the subject code, the translator 19 instead causes the equivalent native code 28 to be executed on the target processor 13. In example embodiments, the translator 19 blinds generated target code 21 to the native code 28 using a defined interface, such as native code or target code call stubs, as discussed in more detail in published PCT application WO2005/008478, the disclosure of which is incorporated herein by reference.

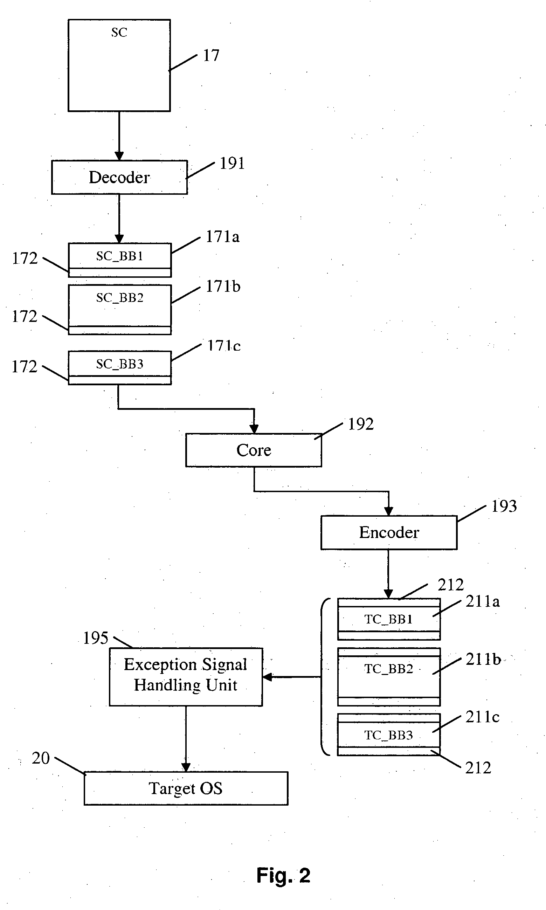

Figure 2 illustrates the translator unit 19 in more detail when running on the target computing platform 10. As discussed above, the front end of the translator 19 includes a decoder unit 191 which decodes a currently needed section of the subject program 17 to provide a plurality of subject code blocks 171 a, 171b, 171 c (which usually each contain one basic block of subject code), and may also provide decoder information 172 in relation to each subject block and the subject instructions contained therein which will assist the later operations of the translator 19. In some embodiments, an IR unit in the core 192 of the translator 19 produces an intermediate representation (IR) from the decoded subject instructions, and optimisations are opportunely performed in relation to the intermediate representation. An encoder 193 as part of the back end of the translator 19 generates (plants) target code 21 executable by the target processor 13. In this simplistic example, three target code blocks 211a-211c are generated to perform work on the target platform 10 equivalent to executing the subject code blocks 171a-171c on the subject platform 1. Also, the encoder 193 may generate control code 212 for some or all of the target code blocks 211a-211c which performs functions such as setting the environment in which the target block will operate and passing control back to the translator 19 where appropriate.

As also shown in Figure 2, the translator 19 is arranged to handle exception signals that are raised during execution of the target code 21. To this end, the translator 19 includes an exception handling unit 195 which is arranged to handle exception signals which are raised during execution of the target code 21 by the target processor 13. Further, in the exemplary embodiments, the same exception handling unit 195 is also arranged to handle exception signals raised while the translator 19 is executing on the target processor 13.

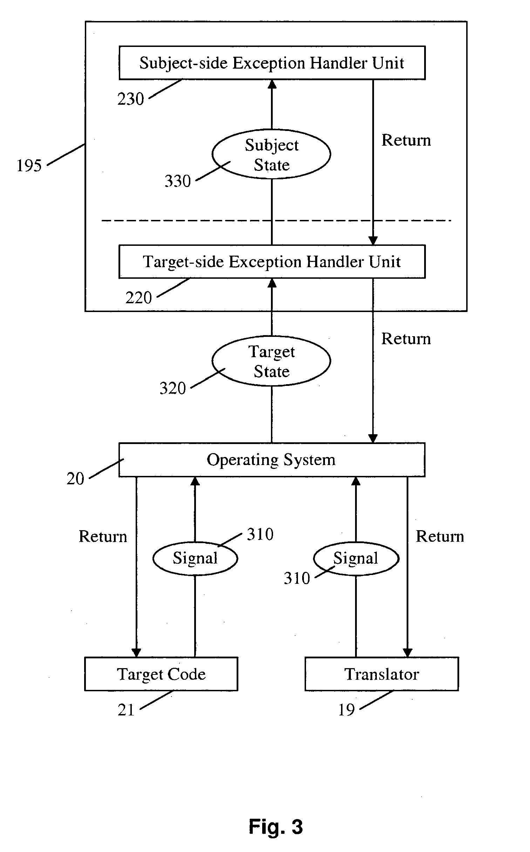

Figure 3 is a schematic diagram illustrating, in general overview, control flow on the target computing platform 10 during signal handling using the exception handling unit 195. Here, the exception handling unit 195 includes a target-side exception handler unit 220 and a subject-side exception handler unit 230.

When a signal 310 arises, the target operating system 20 invokes the exception handling unit 195. A target state 320 represents, generally, the state of execution on the target processor 13. Thus, the target state 320 includes information about the exception signal 310 such as a SIGINFO data structure provided by the operating system 20. Further, the target state 320 optionally includes more detailed information about in particular the state of the target registers 15, at the point where the signal was raised, such as a SIGCONTEXT data structure. Thus, the exception handling unit 195 uses the target state 320 to examine the state of execution on the target processor 13 at the point where the exception signal 310 occurred.

There are various outcomes which can result from handling of the exception signal 310. In many cases it is possible to resume execution of the target code 21 and/or the translator 19 as appropriate. In particular, the exception handling unit 195 examines the target state 320 to determine the nature and cause of the exception and take appropriate responsive action. The exception handling unit 195 will, if appropriate, modify the target state 320, such as by changing a condition code flag or modifying stored data representing the contents of one or more of the target registers 15, before passing execution control back through the operating system 20 to resume execution according to the original or now-modified target state 320. Thus, execution may resume at the original point where the exception occurred, or may resume at a different point in the code, or in a different way, in response to the conditions which lead to the exception signal 310. In particular, an exception may arise during execution of the target code 21 but, after handling the exception, result in a return to execution of the translator 19 because the exception has indicated that the translator 19 now needs to change or regenerate one or more blocks of the target code 21.

The exception handling unit 195 handles many such exception signals 310 solely in the target-side exception handler unit 220 and only with reference to the target state 320. However, some exception signals are not handled by the target-side exception handler unit 220 alone. Here, a subject state 330 is provided which represents a state of execution on the emulated subject processor 3, including in particular representative values for the subject registers 5. Suitably, the subject state 330 makes reference to the one or more abstract register banks 27 discussed above. This subject state 330 is then employed by the subject- side exception handler unit 330 to handle the exception signal. However, it is relatively costly for the exception handler unit 195 to provide the subject state 330 and invoke the subject-side exception handler unit 230, and thus it is desired to minimise the occasions where the subject-side exception handler unit 230 in invoked and the subject state 330 constructed.

As with the target state 320, the subject state 330 may remain the same or may be modified in response to the exception signal 310. This modified subject state 330 typically then results in a corresponding modified target state 320 which causes the target code 21 or the translator 19 to restart execution at a different point or in a different manner.

The subject code 17 will often include one or more signal handler functions. That is, a particular program written in the subject code 17 will often include one or more specific signal handler functions which are to be invoked when specific exception signals arise. Now, instead, the exception signals 310 arise on the target platform and, where appropriate, information representing the subject exception handler is passed to the subject-side exception handler unit 230. The appropriate subject signal handler function is called through the subject-side exception handler unit 230 and executed (as target code) to handle the exception signal. Thus, the subject state 330 may include a subject SIGINFO data structure if that data structure is used by the subject signal handler. Likewise, a subject SIGCONTEXT data structure is populated from information available on the target system if that data structure is used by the subject signal handler. More detailed background information concerning the generation of such a subject state 330 is given in WO2005/006106 entitled "Method and Apparatus for Performing Adjustable Precision Exception Handling", and WO2006/103395 entitled "Method and Apparatus for Precise Handling of Exceptions During Program Code Conversion" referenced above. Notably, these earlier disclosures consider a mechanism to provide the subject state at varying levels of precision for different subject instructions or an efficient mechanism to derive a precise subject state using recovery information, but do not allow for the handling of some exception signals solely with reference to the target state 320.

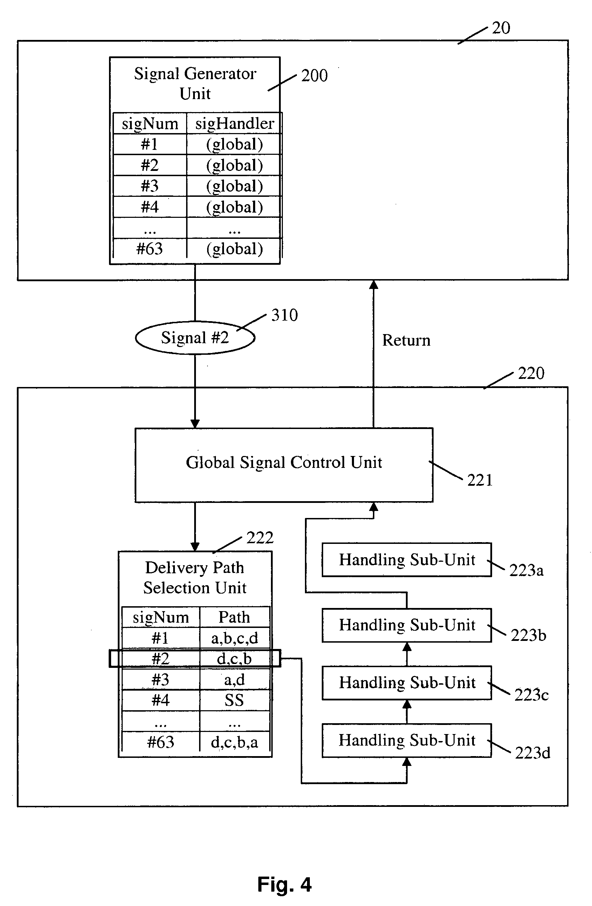

Figure 4 is a schematic diagram illustrating specific parts of the target computing platform in more detail, including in particular the target-side exception handler unit 220.

As shown in Figure 4, a signal generator unit 200, which is suitably part of the operating system 20, is arranged to generate exception signals in response to execution of, amongst other processes, the target code 21 or the translator 19 on the target processor 13. In a multiprocess or multi-threaded computing environment there are many processes executing simultaneously, and the signal generator is responsible for raising exception signals for each process and delivering the exception signals to the respective registered handlers.

The target-side exception handler unit 220 comprises a global signal control unit 221, a delivery path selection unit 222, and a plurality of signal handling sub-units 223.

The global signal control unit 221 is arranged to receive the exception signals raised by the signal generator unit 200 at least in relation to execution of the target code 21 and most suitably also in relation to execution of the translator 19. That is, the global signal control unit 221 receives in-band exception signals for these processes. Further, the global signal control unit 221 is arranged to receive out-of-band exception signals which originate elsewhere in the system and are delivered to these processes.

The delivery path selection unit 222 determines a delivery path of each exception signal, where the delivery path specifies one or more of the plurality signal handling sub-units 223 that will receive the exception signal. The global signal control unit 221 then passes the exception signal to the or each of specified one or more the signal handling sub-units 223 in turn according to the particular delivery path for that exception signal.

That is, the signal control unit 221 selects a first one of the signal handling sub-units 223 according to the delivery path and passes the exception signal to that sub-unit. Then, the signal control unit 221 selects a second one of the signal handling sub-units 223 according to the delivery path and passes the exception signal to that sub-unit, and so on until the exception signal has been delivered in turn to each of the specified sub-units. In some multi-threaded computing environments it is possible that the exception signal is delivered to multiple units simultaneously or is delivered to a second sub-unit whilst the first is still actively processing the signal. However, since each of the sub-units will handle the signal and may take action such as changing the target state 320, it is preferred to treat the sub-units as following a linear path. In particular, the second sub-unit should not change the target state 320 until handling of the exception signal has been completed by the first sub-unit.

Figure 4 shows an exemplary situation where the target computing system 10 supports a plurality of different types of exception signals, and each signal has a corresponding signal number (SIGNUM). The exception handling unit 195 is registered to receive a plurality of these signal types, and in this example the exception handling unit 195 is registered to receive each of the available set of signal types. As shown in Figure 4, the signal generation unit 200 may use a signal table which registers the exception handling unit 195 to receive each of the available set of signals #1 to #63. Thus, when any of these signals are raised, the exception signal is passed to the exception handling unit 195.

As an example, let us assume that signal #2 has been raised. The global signal control unit 221 consults the delivery path selection unit 222 which specifies the particular delivery path for this signal. Here, the delivery path specifies which one or more of the illustrated signal handling sub-units 223a to 223d will receive the signal #2 and also specifies the order in which the selected group of signal handling sub-units 223 will receive the exception signal #2. In this example, the selected group of signal handling sub-units comprises units 223b, 223c and 223d and the order is specified as "d then c then b". Thus, the global signal control unit 221 now passes the exception signal #2 first to the signal handling sub-unit 223d, then 223c, then 223b in turn.

Where one of the signal handling sub-units 223 requests a return to execution (in this case the third sub-unit 223b), the global signal control unit 221 completes handling of the signal and instigates a return to execution of the target code 21 or the translator 19 as appropriate.

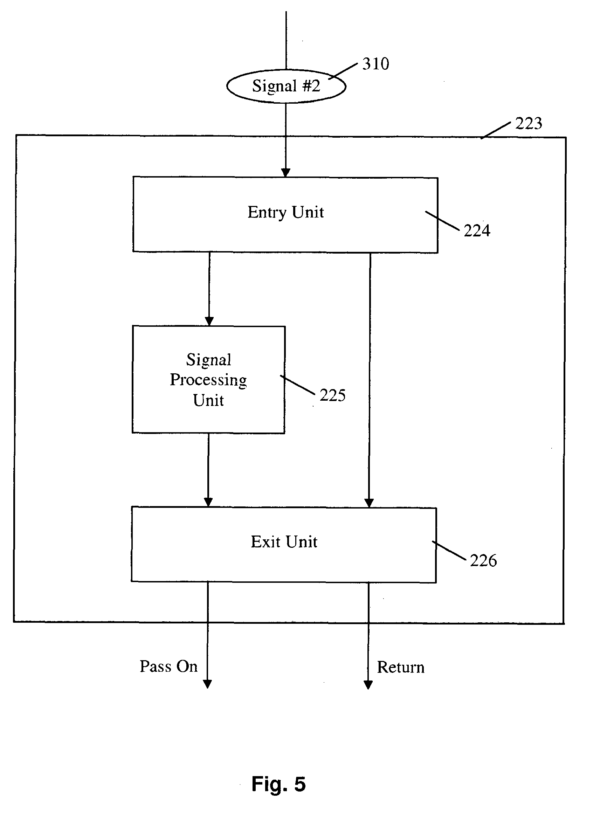

Figure 5 is a schematic diagram illustrating one of the signal handling sub-units 223 in more detail.

As shown in Figure 5, each of the signal handling sub-units 223 comprises an entry unit 224, a signal processing unit 225, and an exit unit 226. The entry unit 224 receives the signal 310 and determines whether this signal is to be processed by the signal processing unit 225. If yes, then the entry unit 224 passes the signal 310 to the signal processing unit 225. If not, then the entry unit 224 passes the signal 310 directly to the exit unit 226. Here, the entry unit 224 examines to the target state 320 to determine whether or not the exception signal is to be processed this time. In most cases, the determination is made by referring to the information provided in relation to the signal 310, such as the signal number or the SIGINFO data structure. Sometimes, however, the determination refers to more detailed context information from the target state 320 such as the SIGCONTEXT data structure.

The signal processing unit 225 performs a predetermined signal processing function on the received exception signal. That is, the signal processing unit 225 processes the signal in order to, at least in part, handle the exception. Optionally, the signal processing unit 225 will modify the target state 320 such that execution will resume differently in response to the handled exception signal.

The exit unit 226 determines whether the signal 310 is now to be passed on to a subsequent signal handling sub-unit 223 (or other unit as will be discussed in more detail below), or else that execution should resume according to the target state 320.

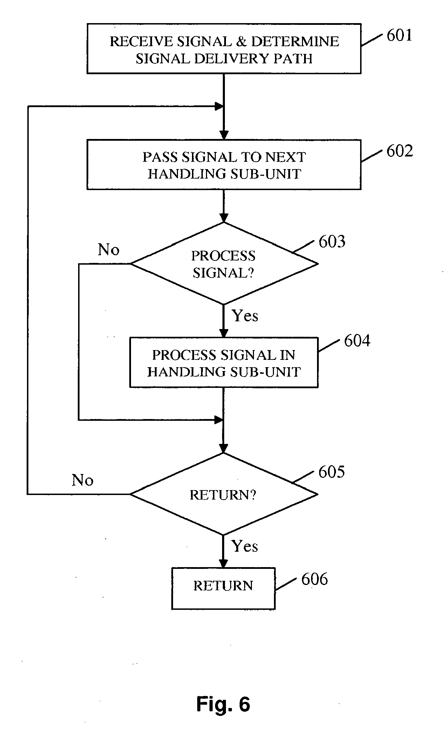

Figure 6 is a schematic flow diagram illustrating a method of handling an exception as undertaken by the signal handling unit 195 and particularly in the target-side exception handler unit 220 and the one or more signal handling sub-units 223.

The exception signal is received at step 601 and a signal delivery path is determined. At step 602, the signal is then passed to a signal handling sub-unit according to the signal delivery path. At step 603 it is determined whether or not to process the signal. If yes, then the signal is processed at step 604. A decision is made at step 605 whether or not to request a return to execution. If no, then the method reverts to step 602 and the signal is passed to the next signal handling sub-unit. Thus, the signal 310 is passed in turn to the first, second, third and subsequent signal handling sub-units according to the signal delivery path. Where a return to execution is requested at step 605, then execution control is returned according to the stored target state 320 at step 606.

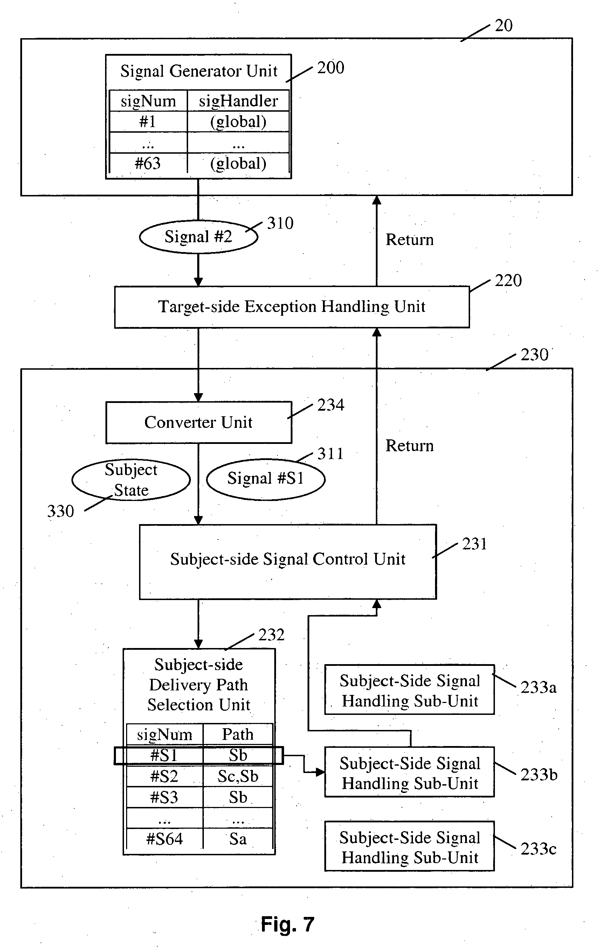

Figure 7 is a schematic diagram showing the subject-side exception handler unit 230 in more detail.

As shown in Figure 7, the subject-side exception handler unit 230 comprises a subject- side signal control unit 231, a subject-side delivery path selection unit 232, a set of subject- side signal handling sub-units 233a-233c, and a converter unit 234.

The converter unit 234 is arranged to convert the exception signal into a format expected on the subject architecture, i.e. into a subject-side exception signal 311. In particular, fields such as the signal number (SIGNUM) often differ between target and subject architectures. In this example, signal #2 on the target-side has been translated to signal #S1 on the subject-side. Also the converter unit 234 provides the precise subject state 330 ready for handling of the subject-side exception signal 311. In particular, the converter unit 234 converts the target state 320 representing the state of execution on the target machine to provide the subject context data structure SIGCONTEXT ready for handling of the exception in the subject-side exception handler unit. Conversely, the converter unit 234 later converts the modified subject state 330 back into the equivalent target state 320 to resume execution in the modified target state.

The subject-side delivery path selection unit 232 determines a delivery path for the exception signal amongst one or more of the subject-side signal handling sub-units 233a-c. In this case, the signal delivery path specifies that the exception signal #S1 will be delivered to the second subject-side signal handling sub-unit 233b.

The subject-side signal control unit 231 passes the exception signal in turn to each of the specified group of signal handling sub-units 233.

Each of the subject-side signal handling sub-units 233 comprises an entry unit, a signal processing unit and an exit unit as discussed above for the target-side signal handling sub-units 223 with reference to Figure 5. Thus, each subject-side signal handling sub-unit 233 receives the exception signal in turn according to the determined subject-side delivery path and selectively processes the exception signal. The relevant subject-side signal handling sub-unit 233 then requests either that the exception signal be passed on or that execution now return according to the (possibly modified) subject state 330.

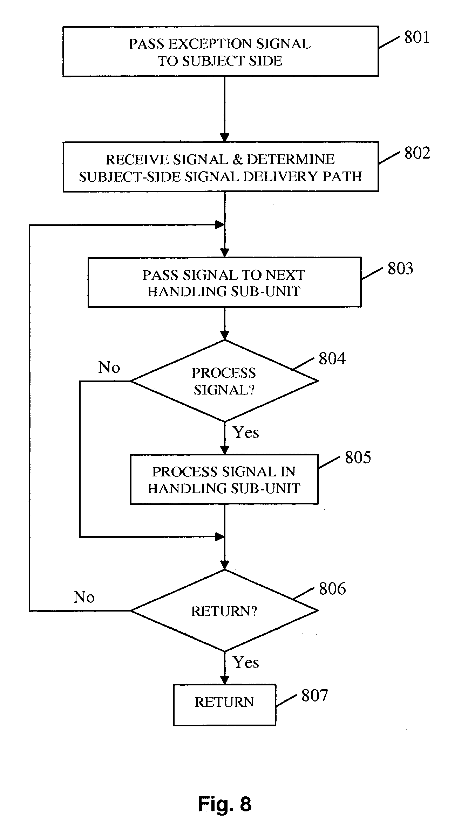

Figure 8 is a schematic flow diagram illustrating an exemplary method of handling an exception signal in embodiments of the present invention. This method is performed in the exception handler unit 195 with respect to the subject-side exception handler unit 230.

Referring to Figure 8, it is determined at step 801 to pass the exception signal to the subject-side exception handler unit 230.

Steps 802 through 807 are then similar to steps 601 through 606 discussed above for Figure 6, whereby the subject-side exception handler unit 230 handles the exception in one or more of the available subject-side signal handling sub-units 233. At step 807 a return to execution is requested according to the subject state 330 which leads in turn to a corresponding target state 320 to resume execution of the target code 21 or the translator 19 as appropriate.

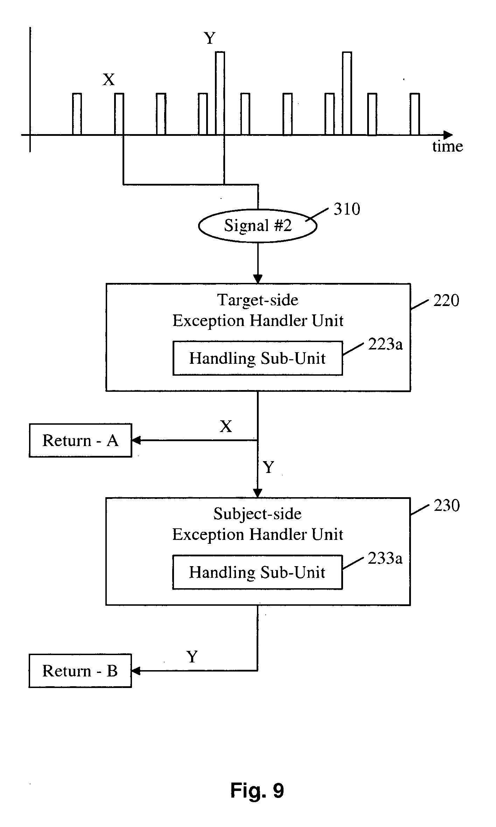

Figure 9 is a schematic diagram showing the operations of the exception handling unit 195 in more detail. In particular, Figure 9 provides a first illustrative example to assist those skilled in the art in gaining a full and detailed understanding of the invention. However, this illustrative example is just one of many exemplary embodiments which may be accomplished using the present invention.

In this first illustrative example, the exception handling mechanism discussed herein is particularly advantageous in relation to timing signals. As will be familiar to those skilled in the art, a program may set a timer which will cause an exception signal to be raised after a specified interval has elapsed. On POSIX-compliant platforms, popularly used timing signals include SIGALRM, SIGPROF and SIGVTALRM.

A problem arises in that many computing architectures provide only one of each such timing signal, whereas both the subject program (now running as target code 21) and the translator 19 may each need to make use of the same type of timing signal. For example, both the target code 21 and the translator 19 wish to use the SIGALRM exception signal. In this example as illustrated in Figure 9, let us assume that the translator 19 is arranged to profile performance of the target code 21 at regular intervals of say every one second as illustrated by the letter X on the timeline. Also, let us assume that the subject program (now converted to the target code 21) is arranged uses the same type of timing signal to determine whether a user has pressed a key on the keyboard within a specified amount of time, such as 5 seconds, as shown by the letter Y on the timeline. The operating system 20 raises a SIGALRM type exception signal 310 which is passed initially to the target-side exception handler unit 220, at time X and at time Y. The delivery path for this type of signal indicates that the timing signal is delivered to a signal handling sub-unit 223a which now establishes whether the timing signal is expected by the target-side in this case by the translator 19. That is, the signal processing unit 225 comprises a frequency arbitrator unit that records expected timing signals and the owner of each expected signal. Thus, where event X gives rise to the signal, the signal handling sub- unit 223 determines that the signal 310 is owned by the translator 19. The signal is now handled and execution returns. By contrast, the exception signal at time Y is passed onto the subject-side exception handler unit 230, i.e. where it is determined that the signal was not expected by the target-side. The subject-side exception handler unit 230 determines an appropriate delivery path and routes the exception signal to a respective signal handling sub- unit 233a. Thus, an exception signal 310 arising from event Y now is received by the subject- side exception handler unit 230 and is handled as appropriate for the subject program.

From this example of Figure 9 it will be appreciated that there are a number of advantages in the exception handling mechanism discussed herein. Firstly, a single type of exception signal - such as SIGALRM - is shared between code which relies on the target state 320 such as the translator 19 or the portions of control code 212 generated by the translator 19 and code which relies on the subject state 330 such as the main blocks 21 1 of the target code 21 which emulate the behaviour expected by the original subject program 17. Secondly, only those signals which are not needed by the target-side are passed on to the subject-side, thereby significantly reducing the number of occasions where the subject state 330 is precisely obtained.

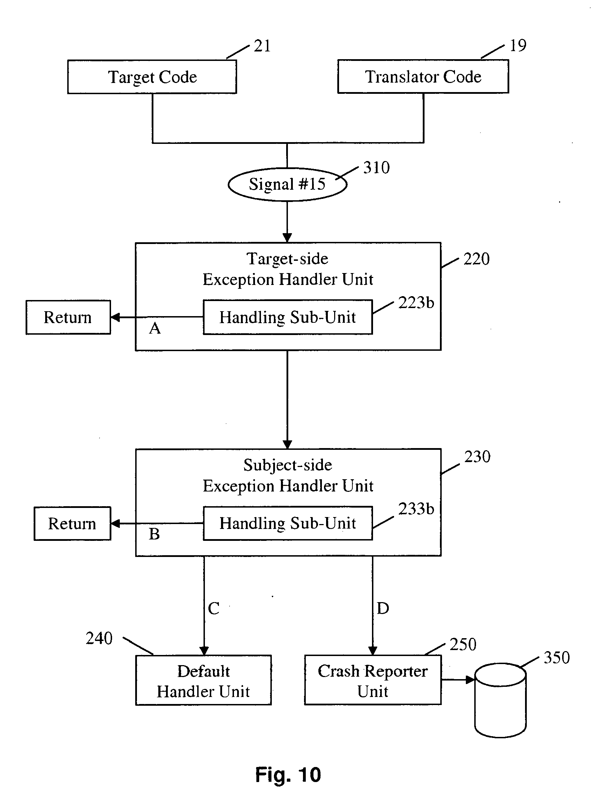

Figure 10 is a schematic diagram showing operations of the exception handling unit 195 in more detail. As shown in Figure 10, the exception handling unit 195 further comprises a default handler unit 240 and a crash reporter unit 250.

The default handler unit 240 is arranged to handle the exception signals according to the exception handling protocol of the target system. That is, the default handler unit 240 provides exception handling behaviour equivalent to the behaviour expected of the target operating system 20. Most commonly, the default behaviour is either to ignore the signal and return, or to terminate execution. An example of default behaviour is that a parent process receives a SIGCHLD exception signal for information when a child process is terminated, but in most cases the signal is ignored and execution continues.

The crash reporter unit 250 is provided as part of the translator code 19 and manages crashes of execution in an orderly manner, in particular to assist with debugging. Here, the crash reporter 250 is arranged to store state information, including for example the target state 320 and the subject state 330, in order to create a crash report data structure 350 containing detailed information concerning the state of execution relating to the crash. In example embodiments, the crash report data structure 350 is stored as a text file (.txt) in the memory system 18 of the target system.

Figure 10 shows four main exception handling routes through the exception handling unit 195, here labelled "A" though "D".

In route A, the exception is handled in one of the target-side exception handling sub- units 223 and returns to execution. In route B, the exception is handled in one of the subject- side exception handling sub-units 233 and returns to execution. In route C, the exception is handled in the default handling unit 240 and returns or terminates. In route D, the exception is handled in the crash reporter 250 and returns or terminates. As shown in Figure 10, the exemplary exception handling unit 195 is particularly advantageous in relation to the handling of floating point exceptions. Some computing architectures, for example those based on the IBM Power PC (TM) processor, do not raise an exception signal when a "divide by zero" illegal mathematical operation is attempted in the processor but instead set the result to zero and continue execution. By contrast, other computing architectures, such as those based on the Intel (TM) x86 processor, will raise an exception signal when the processor performs an illegal "divide by zero" operation. In Figure 10, the target hardware is based on an x86 processor and therefore will produce such a floating point exception when an illegal divide by zero mathematical operation is encountered.

The exception will follow route A when this floating point exception arises through execution of the target code 21 generated by the translator 19 to perform the work of the subject program 17. That is, one of the signal handling sub-units 223b in the target-side exception handler unit 220 is arranged to receive the exception signal 310 and determine, such as by examining a program counter (PC) field in the SIGINFO data structure, that the exception arose from execution of the target code 21 . The exception signal is now handled by resetting the result to zero, i.e. by modifying the content of one of the target registers as represented in the target state 320. Execution may now return to the target code 21 and continue. By resetting the result to zero, the target system will now correctly emulate the expected behaviour of this program according to the subject architecture. Also, the exception has been handled cheaply and, in particular, it has not been necessary to undergo the costly process of providing the subject state 330.

When the same type of floating-point exception signal arises from execution of the translator code 19, then this signal is now likely to represent a serious programming or execution error. Hence, the exception signal 310 now follows route C to the default handler unit 240 or route D to the crash reporter unit 250.

A further example of a frequently encountered exception signal is a segmentation fault (segfault) which indicates that an error has occurred where a program attempts to access memory in a way that is not allowed (e.g. attempting to write into a read-only protected memory area). On POSIX-type systems the symbolic constant for this type of fault is normally SIGSEGV. Such segmentation faults can arise for one of several different reasons and the same type of exception signal will, in different circumstances, make use of the different routes A-D through the exception handling unit 195.

Firstly, segmentation faults can be introduced on purpose as a trap to detect when the target code 21 is attempting to access a protected area of memory, such as an attempt to write into self-modifying code. The signal follows route A and the relevant target-side handling sub-unit 223 changes the target state 320 so that execution returns to the translator 19 to deal with this self-modifying code event. Thus, the translator 19 is able to rely on the exception handling unit to trap certain exception signals.

Secondly, the original subject code 17 has been written to use a segmentation fault as a trap. In this case the signal follows route B and is handled by one of the subject-side signal handling sub-units 233 to invoke a subject signal handling function with reference to the subject state 330.

Thirdly, the segmentation fault is passed to the exception handler unit 195 from another external process. Examining the field SI_CODE in the SIGINFO data structure determines whether the signal is external. In this case the signal follows route C where the default handler unit 240 performs the default behaviour which in this case is to ignore the signal.

Fourthly, a segmentation fault which was not expected and has not been captured by preceding units is passed to the crash reporter 250 following route D - on the basis that this signal has arisen from an unexpected error or bug in the translator.

Thus the same type of exception signal (in this case a segmentation fault) will follow any one of the available routes through the exception handling unit 195 according to the particular circumstances of that signal.

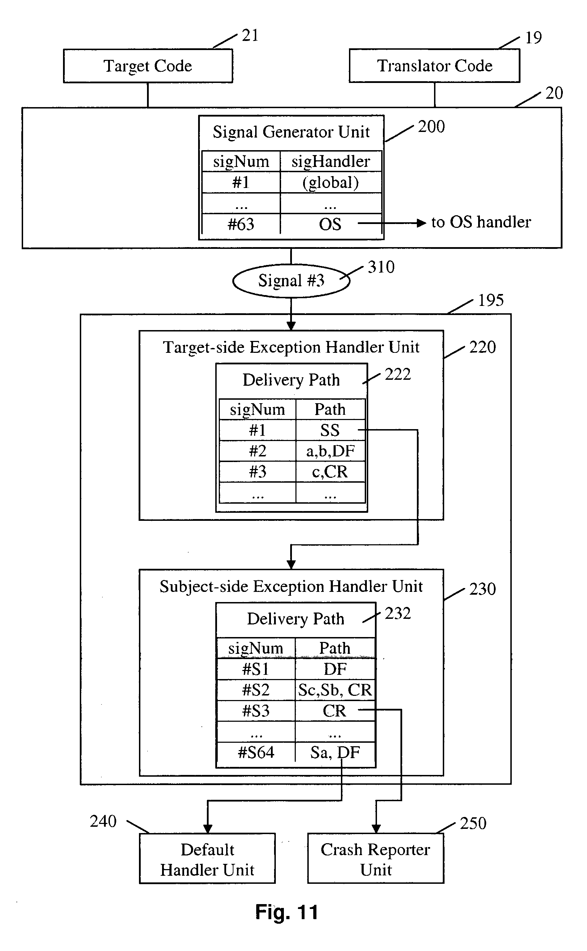

Figure 11 is a schematic diagram showing the exception signal hander unit 195 in more detail in relation to the mechanism which directs the passing of exception signals.

As will be familiar to those skilled in the art, some types of exception signals (e.g. SIGKILL) are not capable of being intercepted and are always handled by the operating system 20. In Figure 11, the signal type #63 is shown as an example of such a non- interceptable exception signal.

However, there are many types of exception signal in the target architecture that are interceptable and, in the exemplary embodiments, the exception handler unit 195 is registered to receive all types of signals on the target architecture which are capable of being intercepted. Here, at least signal types #1 , #2 and #3, etc. are capable of being intercepted and the exception signal handling unit 195 is thus registered to receive such signals. In Figure 11, the signal generator unit 200 in the operating system 20 records the notation "(global)" to show that such signals are to be delivered not to the signal handling elements of the operating system 20 but instead to the exception handler unit 195 of the exemplary embodiments discussed herein.

The delivery path selection unit 222 of the target-side exception handler unit 220 determines that some types of exception signals are passed to the default handler unit 240, as marked with the letters "DF", or the crash reporter "CR" either directly or after first passing the exception signal through one or more of the target-side signal handling sub-units 223 (see Figure 4). In Figure 11 the letters "a", "b" or "c" refer to selected ones of the target-side signal handling sub-units 223. Further, some types of exception signal are passed to the subject-side exception handler unit 230 as marked with the letters "SS", again either directly or after first passing the exception signal through one or more of the target-side signal handling sub-units "a", "b", "c", etc. This determination is conveniently recorded in a table as illustrated in Figure 11 . However, some types of signal such as the segmentation fault discussed above require additional processing to make an appropriate determination, such as examining the SIGINFO or SIGCONTEXT data structures.

Similarly, the delivery path selection unit 232 of the subject-side exception handler unit 230 is configured to selectively pass certain exception signals to the default handler unit 240 as shown with the letters "DF" or the crash reporter unit 250 shown as "CR", either with or without first passing the exception signal through one or more subject-side signal handling sub-units 233 as shown here by the letters "Sa", Sb" or "Sc".

Thus, the delivery path selection units 222,232 provide a simple and convenient mechanism to route each particular type of exception signal along a respective predetermined delivery path.

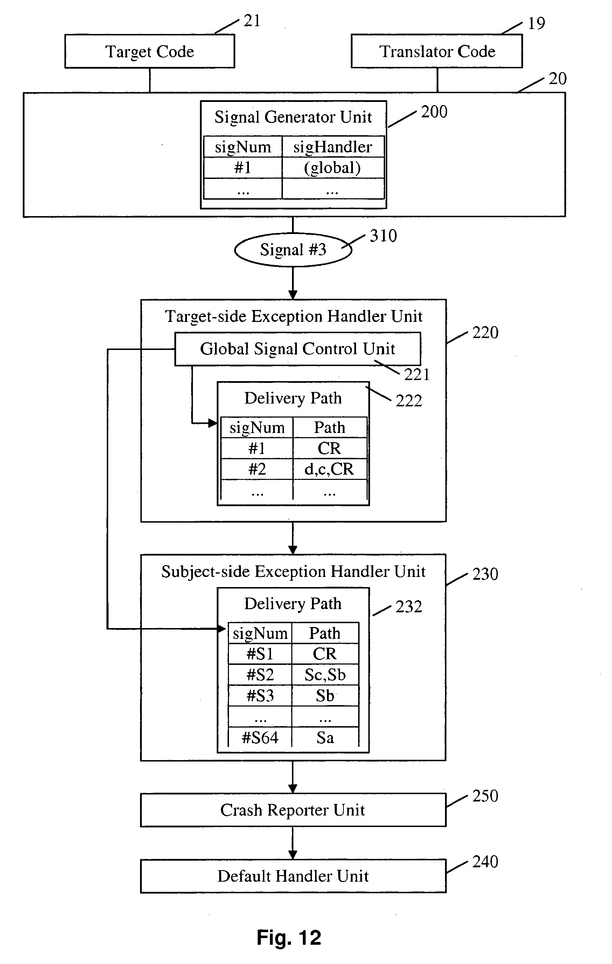

Figure 12 is a schematic diagram illustrating the exemplary exception handling mechanism in more detail in relation to dynamic reconfiguration of signal delivery paths.

As shown in Figure 12, the global signal control unit 221 is configured to dynamically control the target-side delivery path selection unit 222 and the subject-side delivery path selection unit 232. That is, the global signal control unit 221 is arranged to add, amend or replace the specified delivery path for one or more of the types of exception signals. In this way, the global signal control unit 221 will add, amend or replace the set of signal handling sub-units 223, 233 which are to receive a particular type of exception signal and the specified order of the delivery path.

Further, the crash reporter unit 250 is arranged to work in combination with the global signal control unit 221 to dynamically reconfigure the delivery paths. As an example, the crash reporter unit 250 is arranged to introduce an additional bus error signal handling sub-unit where an exception signal has been raised indicating that a particular area of memory is not mapped. This newly introduced bus error sub-unit performs a memory mapping function and returns to execution. If the fault occurs again, the bus error sub-unit will now help to recover more detailed information concerning the target state 320 and/or the subject state 330 and then continue to a subsequent part of the crash reporting process. Thus, the crash reporter unit maintains control of execution and can introduce a bespoke set of signal handling sub- units to handle exception signals.

In these embodiments, the signal table held by the signal generator unit 200 of the target operating system 20 is not updated, even though new exception signal handling behaviour has been introduced within the exception handling unit 195. That is, the set of signal handling sub-units is added to, amended or replaced, without requiring a system call to register the newly set of signal handling sub-units. Thus, the exception handling unit 195 is both flexible and powerful whilst being cheap and efficient to operate.

As discussed above, the exemplary exception handling mechanism of the present invention has many advantages. The mechanism reduces the amount of work which must be done in response to each exception signal, not least because many signals are successfully handled by the target-side exception handling sub-units quickly and cheaply. In many cases the exception signal is handled without the cost of obtaining a subject state representing an equivalent point in execution of the original subject code. Further, the mechanism is able to share one exception signal amongst both target code execution and translator code execution and thereby improve efficiency of operation on the target computing architecture. The mechanism alleviates the sometimes substantial differences that arise between exception handling on a subject computing architecture against exception handling on the target architecture and thus assists the target architecture to better support execution of the subject code. This is vitally important in the field of dynamic translation and especially dynamic binary translation where it is desired to automatically convert program code without any human intervention. Providing multiple subject-side exception handling sub-units allows for easy and efficient mapping of the available exception signals from the target system to the set of subject exception signals required by the subject code. Even where the subject code makes extensive use of signals, the required number or type of signals are now readily supported on the target computing platform. Finally, the exemplary mechanism provides dynamic flexibility and control over the handling of exception signals including especially the ability to provide multiple signal handling sub-units that each receive the same exception signal and the ability to add, amend or replace those units with minimal overhead.

## Claims

1. A computing system, comprising:
a translator unit arranged to convert a subject code into a target code;
a processor unit arranged to execute the target code and provide a target state with respect to execution of the target code in the processor unit;
a signal generator unit arranged to generate an exceptional signal at least in response to execution of the target code in the processor unit; and
an exception handling unit arranged to handle the exception signal; the exception handling unit comprising:
a subject-side exception handler unit arranged to handle the exception signal with respect to a subject state derived from the target state, wherein the subject state provides a state of execution of the subject code on a subject processor unit; and
a target-side exception handler unit arranged to receive the exception signal from the signal generator unit and to selectively handle the exception signal with respect to the target state, wherein the target-side exception handler unit comprises:
a plurality of signal handling sub-units each arranged to selectively process the exception signal with respect to the target state and output a request to return to execution or else a request to pass on the exception signal; a delivery path selection unit arranged to determine a delivery path of the exception signal to a selected group of the plurality of signal handling sub-units; and
a signal control unit arranged to deliver the exception signal in turn to each of the selected group of signal handling sub-units according to the delivery path and (i) where a respective one of the signal handling sub-units outputs the request to return execution then to return execution according to the target state; and (ii) where the signal handling sub-unit outputs the request to pass on the exception signal then to pass on the exception signal to a subsequent one of the selected group of signal handling sub-units according to the delivery path and, where no further of the signal handling sub-units are specified in the delivery path, then by default to deliver the exception signal to the subject-side exception handler unit; **characterised in that**:
the delivery path selection unit is arranged to determine the delivery path to specify an order of delivery of the exception signal to the selected group of signal handling sub-units, and the signal control unit delivers the exception signal to the selected group of signal handling sub-units in order according to the order of delivery.

2. The computing system of claim 1 , wherein the signal generator unit generates the exception signal as one of a plurality of different types and the delivery path selection unit
determines the delivery path to include a respective group of the signal handling sub-units according to the type of the exception signal.

3. The computing system of claim 1 , wherein:
the processor unit is arranged to execute the translator unit and the target code and to provide the target state representing a current state of execution in the processor unit in relation to the target code and the translator unit, respectively; the signal generator unit is arranged to generate a plurality of the exception signals in relation to the target code and in relation to the translator unit; and
at least one of the signal handling sub-units is arranged to handle a respective one or more of the exception signals with respect to the target state when the exception signal results from execution of the translator unit.

4. The computing system of claim 1 , wherein each of the plurality of signal handling sub-units comprises:
an entry unit arranged to receive the exception signal and determine whether or not to process this exception signal;
a signal processing unit arranged to perform a predetermined signal processing function on the exception signal with respect to the target state when determined by the entry unit, including selectively modifying the target state such that execution will resume differently in response to the exception signal; and
an exit unit arranged to output the request either to return to execution or to pass on the exception signal.

5. The computing system of claim 1 , wherein the subject-side exception handler comprises:
a converter unit arranged to convert the target state into the subject state;
a plurality of subject-side signal handling sub-units each arranged to selectively process the exception signal with respect to the subject state and determine either to pass on the exception signal or request a return to execution;
a subject-side delivery path selection unit arranged to determine a delivery path of the exception signal where the delivery path specifies a selected group of one or more amongst the plurality of subject-side signal handling sub-units; and
a subject-side signal control unit arranged to pass the exception signal in turn to each of the selected group of subject-side signal handling sub-units and return to execution in response to the request from a respective one of the group of subject-side signal handling sub-units.

6. The computing system of claim 5, wherein the converter is further arranged to reconvert the subject state into the target state when the subject-side signal control unit determines to return to execution.

7. The computing system of claim 5, wherein each of the plurality of subject-side signal handling sub-units comprises:
an entry unit arranged to receive the exception signal and determine whether or not to process this exception signal;
a signal processing unit arranged to perform a predetermined signal processing function on the exception signal with respect to the subject state when determined by the entry unit, including selectively modifying the subject state such that execution will resume differently in response to the exception signal; and
an exit unit arranged to output the request either to return to execution or to pass on the exception signal.

8. The computing system of claim 1 , wherein the signal control unit is arranged to dynamically reconfigure the delivery path selection unit to determine a different delivery path for the exception signal.

9. A method of handling an exception signal in a computing system having at least one processor, the method comprising the computer-implemented steps of:
converting a subject code into target code executable by the at least one processor;
executing the target code on the at least one processor;
generating an exception signal in relation to execution of the target code;
determining a signal delivery path with respect to the exception signal where the signal delivery path specifies a group of signal handling sub-units selected from amongst a plurality of signal handling sub-units;
delivering the exception signal to a first of the signal handling sub-units in the group according to the signal delivery path;
determining whether to process the signal in the signal handling sub-unit and if so then processing the signal in the signal handling sub-unit to handle the exception; and deciding whether to request a return to execution and if so then returning to execution, or else passing the exception signal to a next signal handling sub-unit of the group according to the signal delivery path; and
repeating the determining and deciding steps in relation to a next signal handling sub-unit in the group; and further comprising:
providing a target state data structure containing information relating to a state of execution of the computing system concerning the exception signal;
processing the exception signal in the signal handling sub-unit with reference to the target state data structure signal including selectively modifying the target state data structure; and
where the deciding step decides to request a return to execution then returning to execution according to the target state data structure.

10. The method of claim 9, further comprising:
selectively passing the exception signal to a subject-side exception handling unit;
converting the target state data structure into a subject state data structure; and
handling the exception signal with respect to the subject state data structure in the subject-side exception handling unit.

11. A computer program comprising computer program code to, when loaded into a computer system and executed thereon, cause said computer system to perform all the steps of the method according claim 9 or claim 10.

## Patentansprüche

1. Datenverarbeitungssystem, das umfasst:
eine Übersetzungseinheit, die zum Wandeln eines Objekt-Codes in einen Ziel-Code ausgelegt ist;
eine Verarbeitungseinheit, die zum Ausführen des Ziel-Codes und zum Bereitstellen eines Zielzustands mit Bezug auf das Ausführen des Ziel-Codes in der Verarbeitungseinheit ausgelegt ist;
eine Signal-Erzeugungseinheit, die zum Erzeugen eines Ausnahmebedingungs-Signals zumindest in Reaktion auf das Ausführen des Ziel-Codes in der Verarbeitungseinheit ausgelegt ist; und
eine Ausnahmebedingungs-Bearbeitungseinheit, die zum Bearbeiten des Ausnahmebedingungs-Signals ausgelegt ist; wobei die Ausnahmebedingungs-Bearbeitungseinheit umfasst:
eine objektseitige Ausnahmebedingungs-Bearbeitungseinheit, die zum Bearbeiten des Ausnahmebedingungs-Signals mit Bezug auf einen Objektzustand ausgelegt ist, der aus dem Zielzustand hergeleitet wird, wobei der Objektzustand einen Ausführungszustand des Objekt-Codes auf einer Objekt-Verarbeitungseinheit bereitstellt; und
eine zielseitige Ausnahmebedingungs-Bearbeitungseinheit, die zum Empfangen des Ausnahmebedingungs-Signals von der Signal-Erzeugungseinheit und zum selektiven Bearbeiten des Ausnahmebedingungs-Signals mit Bezug auf den Zielzustand ausgelegt ist, wobei die zielseitige Ausnahmebedingungs-Bearbeitungseinheit umfasst:
eine Vielzahl von Signalbearbeitungs-Untereinheiten, die jeweils zum selektiven Verarbeiten des Ausnahmebedingungs-Signals mit Bezug auf den Zielzustand und zum Ausgeben einer Anforderung zum Zurückkehren zur Ausführung oder
einer Anforderung zum Weiterleiten des Ausnahmebedingungs-Signals ausgelegt ist; eine Zustellpfad-Auswahleinheit, die zum Festlegen eines Zustellpfads des
Ausnahmebedingungs-Signals an eine ausgewählte Gruppe aus der Vielzahl von Signalbearbeitungs-Untereinheiten ausgelegt ist; und
eine Signal-Steuereinheit, die zum Zustellen des Ausnahmebedingungs-Signals wiederum an jede Untereinheit aus der ausgewählten Gruppe von Signalbearbeitungs-Untereinheiten gemäß dem Zustellpfad ausgelegt ist, und (i) wobei eine entsprechende Untereinheit der Signalbearbeitungs-Untereinheiten die Anforderung zum Zurückkehren zur Ausführung ausgibt, um gemäß dem Zielzustand zur Ausführung zurückzukehren; und (ii) wobei die Signalbearbeitungs-Untereinheit die Anforderung ausgibt, um das Ausnahmebedingungs-Signals weiterzuleiten, dann das Ausnahmebedingungs-Signal an eine nachfolgende Untereinheit aus der ausgewählten Gruppe von Signalbearbeitungs-Untereinheiten gemäß dem Zustellpfad weiterzuleiten, und, wenn keine weiteren Signalbearbeitungs-Untereinheiten in dem Zustellpfad angegeben werden, das Ausnahmebedingungs-Signal standardmäßig an die objektseitige Ausnahmebedingungs-Bearbeitungseinheit zuzustellen;
**dadurch gekennzeichnet, dass**:
die Zustellpfad-Auswahleinheit zum Festlegen des Zustellpfads ausgelegt ist, um eine Zustell-Reihenfolge des Ausnahmebedingungs-Signals an die ausgewählte Gruppe von Signalbearbeitungs-Untereinheiten festzulegen,
und die Signal-Steuereinheit das Ausnahmebedingungs-Signal an die ausgewählte Gruppe von Signalbearbeitungs-Untereinheiten in einer Reihenfolge gemäß der Zustell-Reihenfolge ausgibt.

2. Datenverarbeitungssystem nach Anspruch 1, wobei die Signal-Erzeugungseinheit das Ausnahmebedingungs-Signal als ein Signal aus einer Vielzahl von verschiedenen Signalarten erzeugt und die Zustellpfad-Auswahleinheit den Zustellpfad so festlegt, dass er eine entsprechende Gruppe von Signalbearbeitungs-Untereinheiten gemäß der Art des Ausnahmebedingungs-Signals beinhaltet.

3. Datenverarbeitungssystem nach Anspruch 1, wobei:
die Verarbeitungseinheit zum Ausführen der Übersetzungseinheit und des Ziel-Codes und zum Bereitstellen des Zielzustands ausgelegt ist, der einen momentanen Ausführungszustand in der Verarbeitungseinheit jeweils mit Bezug auf den Ziel-Code und die Übersetzungseinheit darstellt; die Signal-Erzeugungseinheit zum Erzeugen einer Vielzahl der Ausnahmebedingungs-Signale mit Bezug auf den Ziel-Code und mit Bezug auf die Übersetzungseinheit ausgelegt ist; und
mindestens eine der Signalbearbeitungs-Untereinheiten zum Bearbeiten eines entsprechenden oder mehrerer Ausnahmebedingungs-Signale mit Bezug auf den Zielzustand ausgelegt ist, wenn es sich bei dem Ausnahmebedingungs-Signal um das Ausführungsergebnis der Übersetzungseinheit handelt.

4. Datenverarbeitungssystem nach Anspruch 1, wobei jede Untereinheit aus der Vielzahl von Signalbearbeitungs-Untereinheiten umfasst:
eine Eingangseinheit, die zum Empfangen des Ausnahmebedingungs-Signals und zum Ermitteln ausgelegt ist, ob das Ausnahmebedingungs-Signal verarbeitet wird;
eine Signal-Verarbeitungseinheit, die zum Ausführen einer vorgegebenen Signalverarbeitungs-Funktion an dem Ausnahmebedingungs-Signal mit Bezug auf den Zielzustand ausgelegt ist, wenn selbiges von der Eingangseinheit ermittelt wird, wozu das selektive Verändern des Zielzustands gehört, sodass das Ausführen in Reaktion auf das Ausnahmebedingungs-Signal auf andere Art und Weise wiederaufgenommen wird; und
eine Ausgangseinheit, die zum Ausgeben der Anforderung entweder zum Zurückkehren zur Ausführung oder zum Weiterleiten des Ausnahmebedingungs-Signals ausgelegt ist.

5. Datenverarbeitungssystem nach Anspruch 1, wobei die objektseitige Ausnahmebedingungs-Bearbeitungseinheit umfasst:
eine Wandlereinheit, die zum Wandeln des Zielzustands in den Objektzustand ausgelegt ist;
eine Vielzahl von objektseitigen Signalbearbeitungs-Untereinheiten, die jeweils zum selektiven Verarbeiten des Ausnahmebedingungs-Signals mit Bezug auf den Objektzustand und zum Festlegen ausgelegt ist, dass das Ausnahmebedingungs-Signal weitergeleitet oder eine Rückkehr zur Ausführung angefordert wird;
eine objektseitige Zustellpfad-Auswahleinheit, die zum Festlegen eines Zustellpfads des Ausnahmebedingungs-Signals ausgelegt ist, wobei der Zustellpfad eine ausgewählte Gruppe aus einer oder mehreren Untereinheiten aus der Vielzahl von objektseitigen Signalbearbeitungs-Untereinheiten festlegt; und
eine objektseitige Signal-Steuereinheit, die zum Weiterleiten des Ausnahmebedingungs-Signals wiederum an jede Untereinheit in der ausgewählten Gruppe von objektseitigen Signalbearbeitungs-Untereinheiten und zum Zurückkehren zur Ausführung in Reaktion auf die Anforderung von einer entsprechenden Untereinheit aus der Gruppe von objektseitigen Signalbearbeitungs-Untereinheiten ausgelegt ist.

6. Datenverarbeitungssystem nach Anspruch 5, wobei der Wandler ferner zum Rückwandeln des Objektzustands in den Zielzustand ausgelegt ist, wenn die objektseitige Signal-Steuereinheit ein Zurückkehren zur Ausführung festlegt.

7. Datenverarbeitungssystem nach Anspruch 5, wobei jede Untereinheit aus der Vielzahl von objektseitigen Signalbearbeitungs-Untereinheiten umfasst:
eine Eingangseinheit, die zum Empfangen des Ausnahmebedingungs-Signals und zum Ermitteln ausgelegt ist, ob das Ausnahmebedingungs-Signal verarbeitet wird;
eine Signal-Verarbeitungseinheit, die zum Ausführen einer vorgegebenen Signalverarbeitungs-Funktion an dem Ausnahmebedingungs-Signal mit Bezug auf den Objektzustand ausgelegt ist, wenn selbiges von der Eingangseinheit ermittelt wird, wozu das selektive Verändern des Objektzustands gehört, sodass das Ausführen in Reaktion auf das Ausnahmebedingungs-Signal auf andere Art und Weise wiederaufgenommen wird; und
eine Ausgangseinheit, die zum Ausgeben der Anforderung entweder zum Zurückkehren zur Ausführung oder zum Weiterleiten des Ausnahmebedingungs-Signals ausgelegt ist.

8. Datenverarbeitungssystem nach Anspruch 1, wobei die Signal-Steuereinheit zum dynamischen Neukonfigurieren der Zustellpfad-Auswahleinheit ausgelegt ist, um einen anderen Zustellpfad für das Ausnahmebedingungs-Signal festzulegen.

9. Verfahren zum Bearbeiten eines Ausnahmebedingungs-Signals in einem Datenverarbeitungssystem mit mindestens einem Prozessor, wobei das Verfahren die mit einem Computer realisierten Schritte umfasst:
Wandeln eines Objekt-Codes in einen Ziel-Code, der für mindestens einen Prozessor ausführbar ist;
Ausführen des Ziel-Codes auf dem mindestens einen Prozessor;
Erzeugen eines Ausnahmebedingungs-Signals mit Bezug auf die Ausführung des Ziel-Codes;
Festlegen eines Signal-Zustellpfads mit Bezug auf das Ausnahmebedingungs-Signal, wobei der Signal-Zustellpfad eine Gruppe von Signalbearbeitungs-Untereinheiten festlegt, die aus einer Vielzahl von Signalbearbeitungs-Untereinheiten ausgewählt werden;
Zustellen des Ausnahmebedingungs-Signals an eine erste Untereinheit der Signalbearbeitungs-Untereinheiten in der Gruppe gemäß dem Signal-Zustellpfad;
Ermitteln, ob das Signal in der Signalbearbeitungs-Untereinheit verarbeitet wird, und gegebenenfalls Verarbeiten des Signals in der Signalbearbeitungs-Untereinheit zum Bearbeiten der Ausnahme; und Entscheiden, ob eine Rückkehr zur Ausführung angefordert wird, und gegebenenfalls Rückkehren zur Ausführung, andernfalls Weiterleiten des Ausnahmebedingungs-Signals an eine nächste Signalbearbeitungs-Untereinheit aus der Gruppe gemäß dem Signal-Zustellpfad; und
Wiederholen der Schritte des Ermittelns und Entscheidens mit Bezug auf eine nächste Signalbearbeitungs-Untereinheit in der Gruppe; und weiter umfassend:
Bereitstellen einer Zielzustand-Datenstruktur, die Daten mit Bezug auf einen Ausführungszustand des Datenverarbeitungssystems beinhaltet, auf das sich das Ausnahmebedingungs-Signal bezieht;
Verarbeiten des Ausnahmebedingungs-Signals in der Signalbearbeitungs-Untereinheit mit Bezug auf das Signal der Zielzustand-Datenstruktur, wozu das selektive Verändern der Zielzustand-Datenstruktur gehört; und
wenn im Schritt des Entscheidens entschieden wird, eine Rückkehr zum Ausführen anzufordern, Rückkehren zur Ausführung gemäß der Zielzustand-Datenstruktur.

10. Verfahren nach Anspruch 9, das ferner umfasst:
selektives Weiterleiten des Ausnahmebedingungs-Signals an eine objektseitige Ausnahmebedingungs-Bearbeitungseinheit;
Wandeln der Zielzustand-Datenstruktur in eine Objektzustand-Datenstruktur; und
Bearbeiten des Ausnahmebedingungs-Signals mit Bezug auf die Objektzustand-Datenstruktur in der objektseitigen Ausnahmebedingungs-Bearbeitungseinheit.

11. Computerprogramm, das Computerprogramm-Code umfasst, um, wenn der Computerprogramm-Code in ein Datenverarbeitungssystem geladen und darauf ausgeführt wird, das Datenverarbeitungssystem zum Ausführen aller Schritte des Verfahrens nach Anspruch 9 oder 10 zu veranlassen.

## Revendications

1. Système informatique, comprenant :
une unité de traducteur agencée pour convertir un code sujet en un code cible ;
une unité de processeur agencée pour exécuter le code cible et fournir un état cible concernant l'exécution du code cible dans l'unité de processeur ;
une unité de générateur de signaux agencée pour générer un signal d'exception au moins en réponse à l'exécution du code cible dans l'unité de processeur ; et
une unité de gestion d'exception agencée pour gérer le signal d'exception ; l'unité de gestion d'exception comprenant :
une unité de gestionnaire d'exception du côté sujet agencée pour gérer le signal d'exception concernant un état sujet déduit de l'état cible, dans lequel l'état sujet fournit un état d'exécution du code sujet sur une unité de processeur sujet ; et
une unité de gestionnaire d'exception du côté cible agencée pour recevoir le signal d'exception provenant de l'unité de générateur de signaux et gérer sélectivement le signal d'exception concernant l'état cible, dans lequel l'unité de gestionnaire d'exception du côté cible comprend :
une pluralité de sous-unités de gestion de signaux agencées chacune afin de traiter sélectivement le signal d'exception concernant l'état cible et émettre une demande de retour à l'exécution ou sinon une demande pour faire passer le signal d'exception ; une unité de sélection de trajets de remise agencée pour déterminer un trajet de remise du signal d'exception à un groupe sélectionné de la pluralité de sous-unités de gestion de signaux ; et
une unité de commande de signaux agencée pour remettre le signal d'exception à chacune du groupe sélectionné de sous-unités de gestion de signaux conformément au trajet de remise et (i) où une sous-unité respective des sous-unité de gestion de signaux émet la demande de retour à l'exécution puis retourne à l'exécution conformément à l'état cible ; et (ii) où la sous-unité de gestion de signaux émet la demande pour faire passer le signal d'exception puis fait passer le signal d'exception vers une sous-unité subséquente du groupe sélectionné de sous-unités de gestion de signaux conformément au trajet de remise et, quand aucune sous-unité supplémentaire des sous-unités de gestion de signaux n'est spécifiée dans le trajet de remise, remet par défaut le signal d'exception à l'unité gestionnaire d'exception du côté sujet ; **caractérisé en ce que**
l'unité de sélection de trajet de remise est agencée pour déterminer le trajet de remise afin de spécifier un ordre de remise du signal d'exception au groupe sélectionné de sous-unités de gestion de signaux, et l'unité de commande de signaux délivre le signal d'exception au groupe sélectionné de sous-unités de gestion de signaux dans l'ordre conformément à l'ordre de remise.

2. Système informatique selon la revendication 1, dans lequel l'unité de générateur de signaux génère le signal d'exception comme un d'une pluralité de différents types et l'unité de sélection de trajets de remise détermine le trajet de remise afin d'inclure un groupe respectif des sous-unités de gestion de signaux conformément au type de signal d'exception.

3. Système informatique selon la revendication 1, dans lequel :
l'unité de processeur est agencée pour exécuter l'unité de traducteur et le code cible et fournir un état cible représentant un état actuel d'exécution dans l'unité de processeur en relation avec le code cible et l'unité de traducteur, respectivement ; l'unité de générateur de signaux est agencée pour générer une pluralité de signaux d'exception en relation avec le code cible et en relation avec l'unité de traducteur ;
au moins une des sous-unités de gestion de signaux est agencée pour gérer un ou plusieurs signaux respectifs des signaux d'exception concernant l'état ciblent quand le signal d'exception résulte de l'exécution de l'unité de traducteur.

4. Système informatique selon la revendication 1, dans lequel chacune de la pluralité de sous-unités de gestion des signaux comprend :
une unité d'entrée agencée pour recevoir le signal d'exception et déterminer si ou non traiter ce signal d'exception ;
une unité de traitement de signaux agencée pour exécuter une fonction de traitement de signaux prédéterminée sur le signal d'exception concernant l'état cible quand déterminé par l'unité d'entrée, incluant de modifier sélectivement l'état cible de sorte que l'exécution recommencera différemment en réponse au signal d'exception ; et
une unité de sortie agencée pour émettre la demande soit de retour à l'exécution soit pour faire passer le signal d'exception.

5. Système informatique selon la revendication 1, dans lequel le gestionnaire d'exception du côté sujet comprend :
une unité de convertisseur agencée pour convertir l'état cible en l'état sujet ;
une pluralité de sous-unités de gestion de signaux du côté sujet, agencées chacune pour traiter sélectivement le signal d'exception concernant l'état sujet et déterminer si faire passer le signal d'exception ou demander un retour à l'exécution ;
une unité de sélection de trajets de remise du côté sujet agencée pour déterminer un trajet de remise du signal d'exception où le trajet de remise spécifie un groupe sélectionné d'une ou plusieurs parmi la pluralité de sous-unités de gestion de signaux du côté sujet ; et
une unité de commande de signaux du côté sujet agencée pour faire passer le signal d'exception à chacune du groupe sélectionné de sous-unités de gestion de signaux du côté sujet et retourner à l'exécution en réponse à la demande provenant d'une sous-unité respective du groupe de sous-unités de gestion de signaux du côté sujet.

6. Système informatique selon la revendication 5, dans lequel le convertisseur est en outre agencé pour reconvertir l'état sujet en l'état cible quand l'unité de commande de signaux du côté sujet détermine un retour à l'exécution.

7. Système informatique selon la revendication 5, dans lequel chacune de la pluralité de sous-unités de gestion de signaux du côté sujet comprend :
une unité d'entrée agencée pour recevoir le signal d'exception et déterminer si ou non traiter ce signal d'exception ;
une unité de traitement de signaux agencée pour exécuter une fonction de traitement de signaux prédéterminée sur le signal d'exception concernant l'état cible quand déterminé par l'unité d'entrée, incluant de modifier sélectivement l'état cible de sorte que l'exécution recommencera différemment en réponse au signal d'exception ; et
une unité de sortie agencée pour émettre la demande soit de retour à l'exécution soit pour faire passer le signal d'exception.

8. Système informatique selon la revendication 1, dans lequel l'unité de commande de signaux est agencée pour reconfigurer dynamiquement l'unité de sélection de trajet de remise afin de déterminer un trajet de remise différent pour le signal d'exception.

9. Procédé de gestion d'un signal d'exception dans un système informatique ayant au moins un processeur, le procédé comprenant les étapes implémentées par ordinateur consistant à :
convertir un code sujet en un code cible exécutable par au moins un processeur ;
exécuter le code cible sur au moins un processeur ;
générer un signal d'exception en relation avec l'exécution du code cible ;
déterminer un trajet de remise de signaux concernant le signal d'exception où le trajet de remise de signaux spécifie un groupe de sous-unités de gestion de signaux sélectionnées parmi une pluralité de sous-unités de gestion de signaux ;
remettre le signal d'exception à une première des sous-unité de gestion de signaux dans le groupe conformément au trajet de remise de signaux ;
déterminer si traiter le signal dans la sous-unité de gestion de signaux et si c'est le cas, traiter alors le signal dans la sous-unité de gestion de signaux afin de gérer l'exception ; et décider si demander un retour à l'exécution et si c'est le cas, retourner à l'exécution,
ou sinon faire passer le signal d'exception vers une sous-unité de gestion de signaux suivante conformément au trajet de remise des signaux ; et
répéter les étapes de détermination et décision en relation avec l'unité de gestion de signaux suivante dans le groupe ; et comprenant en outre de :
fournir une structure de données d'état cible contenant des informations relatives à un état d'exécution du système informatique concernant le signal d'exception ;
traiter le signal exception dans la sous-unité de gestion de signal en se référant au signal de structure de données d'état cible incluant de modifier sélectivement la structure de données d'état cible ; et
ou l'étape de décision décide de demander un retour à l'exécution puis de retourner à l'exécution conformément à la structure de données d'état cible.

10. Procédé selon la revendication 9, comprenant en outre de :
faire passer sélectivement le signal d'exception de l'unité de gestion d'exception de côté sujet ;
convertir la structure de données d'état cible en une structure de données d'état sujet ; et
gérer le signal d'exception concernant la structure de données d'état sujet dans l'unité de gestion d'exception du côté sujet.

11. Programme informatique comprenant du code de programme informatique pour, quand il est chargé dans un système informatique et exécuté sur celui-ci, amener ledit système informatique à effectuer toutes les étapes de procédé selon la revendication 9 ou 10.
